# DEMANDE DE BREVET EUROPEEN

(11) **EP 4 844 981 A1**
(43) Date de publication de la demande: **25.11.2026**
(21) Numéro de dépôt: 26179815.1
(22) Date de dépôt: 20.05.2026
(51) Int. Cl.: H02J 13/12, H02J 1/08, H02J 13/13, H04B 3/54

(54) **PROCEDE DE DETERMINATION D'UNE PHASE DE BRANCHEMENT D'UN COMPTEUR ELECTRIQUE INTELLIGENT DANS UNE INFRASTRUCTURE DE DISTRIBUTION ELECTRIQUE**

(30) Priorité: 20.05.2025 FR 2505406
(71) Demandeur: SAGEMCOM ENERGY & TELECOM SAS, 92270 Bois-Colombes (FR)
(72) Inventeur: TEBOULLE, Henri, 92270 BOIS-COLOMBES (FR); ROTER, Ziv, 92270 BOIS-COLOMBES (FR)
(74) Mandataire: Cabinet Le Guen Maillet

(57) **Abrégé**

Une infrastructure de distribution électrique (100) comporte des dispositifs nœuds (110, 120) qui comportent des interfaces de communication par courants porteurs en ligne et de communications sans-fil par radiofréquences. Chaque dispositif nœud (110, 120) comporte un compteur de détection de phase synchronisé sur détection de passage à zéro en front montant de signal électrique alternatif. Une couche de contrôle d'accès au medium dédiée aux communications sans-fil par radiofréquences d'un récepteur lit, dans une trame reçue, un premier horodatage représentatif d'un instant de transmission de ladite trame ainsi qu'une information de phase de branchement, et génère un deuxième horodatage basé sur sa lecture du compteur de détection de phase et sur un délai prédéterminé de traitement de trames en réception par communications sans-fil par radiofréquences. Le récepteur détermine sa propre phase de branchement à partir de l'information de phase branchement lue et de la différence entre les deuxième et premier horodatages.

## Description

### DOMAINE TECHNIQUE

La présente invention concerne une détermination d'une phase de branchement d'un compteur électrique intelligent (« electric smart meter » en anglais) dans une infrastructure de distribution électrique qui comporte un concentrateur de données et des compteurs électriques intelligents, chacun comportant une interface de communication par courants porteurs en ligne et une interface de communication sans-fil par radiofréquences.

### ETAT DE LA TECHNIQUE ANTERIEURE

Dans un réseau de communication par courants porteurs en ligne CPL (PLC, « PowerLine Communications » en anglais), tel que décrit dans les spécifications « Narrowband OFDM PLC specifications for G3-PLC networks », mars 2022, un concentrateur de données (DC, « Data Concentrator » en anglais), situé dans un sous-répartiteur électrique distribuant de l'énergie électrique à un ensemble d'installations électriques supervisées par des compteurs électriques intelligents respectifs, comporte 3 phases qu'il connaît de manière absolue : Phase 1 (P1) ; Phase 2 (P2) retardée d'un tiers de période de la fréquence du réseau électrique par rapport au signal électrique alternatif de la Phase 1, soit 120°; Phase 3 (P3) retardée de deux tiers de période de la fréquence du réseau électrique, soit de 240° par rapport au signal électrique alternatif de la Phase 1.

Comme indiqué dans les spécifications « Narrowband OFDM PLC specifications for G3-PLC networks », mars 2022, il est important de connaître sur quelle phase électrique est connecté tel ou tel compteur électrique intelligent, pour équilibrer le réseau électrique sur chacune des phases et aussi vérifier des pertes inattendues dans le réseau électrique.

Dans un tel réseau de communication par courants porteurs en ligne, tout compteur électrique intelligent est alors apte à déterminer quel est son écart de phase par rapport à un voisin dans le réseau de communication par courants porteurs en ligne, ce voisin pouvant être soit un autre compteur électrique intelligent ou le concentrateur de données. Chaque compteur électrique intelligent, de même que le concentrateur de données, utilise pour ce faire un mécanisme de détection de passage à zéro (ZC, « Zero Crossing » en anglais), en front montant, du signal électrique alternatif, ainsi qu'un compteur de détection de phase (PDC, « Phase Detection Counter » en anglais) synchronisé sur le passage à zéro, en front montant, du signal électrique alternatif. Le compteur de détection de phase a une valeur sur 8 bits, pour laquelle un différentiel de 256 correspond à un retard de 360°, soit une période complète de la fréquence du réseau électrique (e.g., 50 Hz). À noter que dans le cas d'un dispositif polyphasé, la détection dudit passage à zéro s'effectue sur la Phase 1 (P1).

Lors d'un envoi de trame, le transmetteur génère un horodatage basé sur la valeur du compteur de détection de phase au moment où la trame est transmise, ainsi qu'un délai prédéterminé de traitement des trames à l'émission (propre à l'implémentation du transmetteur). Cet horodatage est inscrit dans un champ d'un entête de contrôle de trame (FCH, « Frame Control Header » en anglais), qui est une structure de données transmise au début de chaque trame de couche PHY et qui contient diverses informations sur la trame en question. Le récepteur fournit son propre horodatage de l'instant où la trame en question est reçue, grâce aussi à son mécanisme de détection de passage à zéro et à la valeur de son compteur de détection de phase, en tenant compte d'un délai prédéterminé de traitement des trames en réception (propre à l'implémentation du récepteur), et est ainsi capable de calculer un différentiel de phase entre l'émetteur et le récepteur.

Ceci est expliqué au §8.10 des spécifications « Narrowband OFDM PLC specifications for G3-PLC networks », mars 2022.

Un problème posé par cet état de la technique est qu'il ne prend pas en compte de nouveaux types de compteurs électriques intelligents qui disposent d'une double interface de communication. En effet, des compteurs électriques intelligents qui disposent d'une interface de communication sans-fil par radiofréquences (RF) en sus d'une interface de communication par courants porteurs en ligne sont apparus. Or, lorsque la communication par courants porteurs en ligne est inopérante (*e.g.*, signal trop bruité), il n'existe pas de mécanisme pour transmettre des informations permettant de déterminer l'éventuel écart de phase par rapport à un voisin en utilisant l'interface de communication sans-fil par radiofréquences. De plus, au-delà de la limitation du mécanisme présenté ci-dessus aux communications par courants porteurs en ligne, cet état de la technique ne permet pas de déterminer au sein de chaque compteur électrique intelligent quelle est la phase de branchement dudit compteur électrique intelligent, mais uniquement son écart de phase par rapport à un dispositif nœud voisin. Il serait souhaitable de connaître au sein de chaque compteur électrique intelligent quelle est la phase de branchement dudit compteur électrique intelligent, de sorte à faciliter des interventions d'opérateurs sur site pour contrôler cette phase ou faciliter des opérations de rééquilibrage de réseau électrique.

Il est alors souhaitable de pallier ces inconvénients de l'état de la technique.

### EXPOSE DE L'INVENTION

Il est proposé ici un procédé de détermination d'une phase de branchement d'un compteur électrique intelligent, dit premier dispositif nœud, dans une infrastructure de distribution électrique comportant un concentrateur de données situé dans un sous-répartiteur électrique distribuant de l'énergie électrique à un ensemble d'installations électriques supervisées par des compteurs électriques intelligents respectifs, le concentrateur de données et chaque compteur électrique intelligent étant un dispositif nœud comportant une interface de communication par courants porteurs en ligne et une interface de communication sans-fil par radiofréquences, chaque dispositif nœud comportant un mécanisme de détection de passage à zéro en front montant de signal électrique alternatif et un compteur de détection de phase qui est synchronisé sur le passage à zéro en front montant du signal électrique alternatif. Le procédé est exécuté par le premier dispositif nœud et comporte les étapes suivantes :
- lire, par une couche de contrôle d'accès au medium dédiée aux communications sans-fil par radiofréquences, dans une trame reçue d'un deuxième dispositif nœud par communication sans-fil par radiofréquences, un premier horodatage représentatif d'un instant de transmission de ladite trame par le deuxième dispositif nœud, ainsi qu'une information de phase de branchement du deuxième dispositif nœud dans l'infrastructure de distribution électrique ;
- lire, par la couche de contrôle d'accès au medium dédiée aux communications sans-fil par radiofréquences, la valeur du compteur de détection de phase, et générer, par la couche de contrôle d'accès au medium dédiée aux communications sans-fil par radiofréquences, un deuxième horodatage basé sur la valeur lue du compteur de détection de phase, ainsi qu'un délai prédéterminé de traitement de trames en réception qui correspond à un temps fixe entre la détection de la trame en question par une couche physique dédiée aux communications sans-fil par radiofréquences et la lecture de la valeur du compteur de détection de phase par la couche de contrôle d'accès au medium dédiée aux communications sans-fil par radiofréquences ; et
- déterminer une information de phase de branchement du premier dispositif nœud dans l'infrastructure de distribution électrique à partir de ladite information de phase de branchement du deuxième dispositif nœud et de la différence entre le deuxième horodatage et le premier horodatage.

Ainsi, lorsque la communication par courants porteurs en ligne est inopérante (*e.g.*, signal trop bruité), l'interface de communication sans-fil par radiofréquences est astucieusement utilisée grâce à sa couche de contrôle d'accès au medium qui accède au compteur de détection de phase et compense le temps entre la détection de la trame en question par la couche physique correspondante et la lecture du compteur de détection de phase par ladite couche de contrôle d'accès au medium. Cela permet, en sus de l'information de phase de branchement du deuxième dispositif nœud dans l'infrastructure de distribution électrique, au premier dispositif nœud de déterminer sur quelle phase le premier dispositif nœud est branché dans l'infrastructure de distribution électrique.

Dans un mode de réalisation particulier, le procédé comporte en outre :
- lire, par la couche de contrôle d'accès au medium dédiée aux communications sans-fil par radiofréquences, dans la trame reçue du deuxième dispositif nœud par communication sans-fil par radiofréquences, une information d'éventuelle inversion phase-neutre ou de rotation de phase subie par le deuxième dispositif nœud ; et
- déterminer une information d'éventuelle inversion phase-neutre ou rotation de phase subie par le premier dispositif nœud, à partir de l'information de phase de branchement du premier dispositif nœud dans l'infrastructure de distribution électrique et de l'information d'éventuelle inversion phase-neutre ou de rotation de phase subie par le deuxième dispositif nœud.

Dans un mode de réalisation particulier, dans le cas d'un récepteur biphasé, l'information de phase de branchement du premier dispositif nœud dans l'infrastructure de distribution électrique est en outre déterminée à partir de l'information d'éventuelle inversion phase-neutre ou de rotation de phase subie par le deuxième dispositif nœud.

Dans un mode de réalisation particulier, le deuxième horodatage est calculé de la façon suivante : $Rx _ PDC = PDC - \left(Rx_D\times PDC_Freq\right)$ où Rx_PDC est ledit deuxième horodatage, PDC est ladite valeur du compteur de détection de phase, Rx_D est ledit délai prédéterminé de traitement des trames en réception, et PDC_Freq est une fréquence du compteur de détection de phase.

Dans un mode de réalisation particulier, le procédé comporte :
- déterminer, par la couche de contrôle d'accès au medium dédiée aux communications sans-fil par radiofréquences, à partir du premier horodatage et du deuxième horodatage, un éventuel écart de phase entre le premier dispositif nœud et le deuxième dispositif nœud, et l'éventuel écart de phase est représenté par une information calculée de la façon suivante : $PhaseDifferential = R \left(CounterDifferential/60_Deg_PDC\right) % 6$ avec $CounterDifferential = \left(Rx_PDC-Tx_PDC\right)$
où Tx_PDC est le premier horodatage, R est l'opérateur d'arrondi, 60_Deg_PDC est une constante exprimant 60 degrés par incréments de 256/360^{e} et % est l'opérateur modulo.

Dans un mode de réalisation particulier, lorsque CounterDifferential est négatif, CounterDifferential est translaté dans le domaine des entiers positifs en lui ajoutant 256 unités.

Dans un mode de réalisation particulier, le procédé comporte :
- retenir, pour déterminer la phase sur laquelle le premier dispositif nœud est branché dans l'infrastructure de distribution électrique, une valeur finale d'éventuel écart de phase avec le deuxième dispositif nœud en retenant la valeur d'éventuel écart de phase qui a été la plus obtenue à partir d'une quantité prédéterminée de trames reçues par communications sans-fil par radiofréquences.

Il est également proposé un procédé permettant de déterminer une phase de branchement d'un compteur électrique intelligent, dit premier dispositif nœud, dans une infrastructure de distribution électrique comportant un concentrateur de données situé dans un sous-répartiteur électrique distribuant de l'énergie électrique à un ensemble d'installations électriques supervisées par des compteurs électriques intelligents respectifs, le concentrateur de données et chaque compteur électrique intelligent étant un dispositif nœud comportant une interface de communication par courants porteurs en ligne et une interface de communication sans-fil par radiofréquences, chaque dispositif nœud comportant un mécanisme de détection de passage à zéro en front montant de signal électrique alternatif et un compteur de détection de phase qui est synchronisé sur le passage à zéro en front montant du signal électrique alternatif. Le procédé est exécuté par le deuxième dispositif nœud et comporte les étapes suivantes :
- obtenir une information de phase de branchement du deuxième dispositif nœud dans l'infrastructure de distribution électrique ;
- lire, par la couche de contrôle d'accès au medium dédiée aux communications sans-fil par radiofréquences, la valeur du compteur de détection de phase, et générer, par la couche de contrôle d'accès au medium dédiée aux communications sans-fil par radiofréquences, un horodatage basé sur la valeur lue du compteur de détection de phase, ainsi qu'un délai prédéterminé de traitement de trames en transmission qui correspond à un temps fixe entre la lecture de la valeur du compteur de détection de phase par la couche de contrôle d'accès au medium dédiée aux communications sans-fil par radiofréquences et la transmission de ladite trame par une couche physique dédiée aux communications sans-fil par radiofréquences ;
- construire, par la couche de contrôle d'accès au medium dédiée aux communications sans-fil par radiofréquences, une trame destinée à permettre au premier dispositif nœud de déterminer la phase de branchement du premier dispositif nœud dans l'infrastructure de distribution électrique, incluant ledit horodatage ainsi que l'information de branchement du deuxième dispositif nœud dans l'infrastructure de distribution électrique ;
- appliquer une procédure de vérification de canal libre, et le cas échéant, transmettre ladite trame construite, en respectant ledit temps fixe.

Ainsi, lorsque la communication par courants porteurs en ligne est inopérante (*e.g.*, signal trop bruité), l'interface de communication sans-fil par radiofréquences est astucieusement utilisée grâce à sa couche de contrôle d'accès au medium qui accède au compteur de détection de phase, compense le temps entre la lecture du compteur de détection de phase par ladite couche de contrôle d'accès au medium et la transmission effective de la trame en question par la couche physique correspondante. De plus, un délai fixe est appliqué à la transmission, c'est-à-dire sans application d'aléa temporel lors de l'accès au canal et sans rejeu. En outre, l'information de branchement du deuxième dispositif nœud dans l'infrastructure de distribution électrique est ajoutée, le tout pour permettre au premier dispositif nœud de déterminer la phase sur laquelle ledit premier dispositif nœud est branché dans l'infrastructure de distribution électrique.

Il est également proposé un produit programme d'ordinateur, comportant des instructions entraînant l'exécution, par un processeur, de l'un ou l'autre des procédés présentés ci-dessus, dans l'un quelconque de leurs modes de réalisation, lorsque lesdites instructions sont exécutées par le processeur. Il est également proposé un support de stockage, stockant un programme d'ordinateur comportant des instructions entraînant l'exécution, par un processeur, de l'un ou l'autre des procédés présentés ci-dessus, dans l'un quelconque de leurs modes de réalisation, lorsque lesdites instructions sont lues depuis le support de stockage et exécutées par le processeur.

Il est également proposé un dispositif nœud, comportant de la circuiterie électronique configurée pour exécuter l'un ou l'autre des procédés présentés ci-dessus, dans l'un quelconque de leurs modes de réalisation. Il est également proposé une infrastructure de distribution électrique comportant un concentrateur de données situé dans un sous-répartiteur électrique distribuant de l'énergie électrique à un ensemble d'installations électriques supervisées par des compteurs électriques intelligents respectifs, le concentrateur de données et chaque compteur électrique intelligent étant un dit dispositif nœud comportant une interface de communication par courants porteurs en ligne et une interface de communication sans-fil par radiofréquences, chaque dispositif nœud comportant un mécanisme de détection de passage à zéro en front montant de signal électrique alternatif et un compteur de détection de phase qui est synchronisé sur le passage à zéro en front montant du signal électrique alternatif, dans laquelle chaque dispositif nœud comporte de la circuiterie électronique configurée pour exécuter l'un ou l'autre des procédés présentés ci-dessus, dans l'un quelconque de leurs modes de réalisation.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un exemple d'infrastructure de distribution électrique comportant un concentrateur de données situé dans un sous-répartiteur électrique distribuant de l'énergie électrique à un ensemble d'installations électriques supervisées par des compteurs électriques intelligents respectifs ;
[Fig. 2] illustre schématiquement des communications établies dans l'infrastructure de distribution électrique ;
[Fig. 3] illustre schématiquement un exemple de plateforme matérielle de contrôleur utilisable dans le concentrateur de données et les compteurs électriques intelligents ;
[Fig. 4] illustre schématiquement des interactions entre couches protocolaires dans un transmetteur pour une transmission de trame par communications sans-fil par radiofréquences ;
[Fig. 5] illustre schématiquement des interactions entre couches protocolaires dans un récepteur pour une réception de trame par communications sans-fil par radiofréquences ; [Fig. 6] illustre schématiquement un algorithme implémenté par le transmetteur, dans un mode de réalisation ;
[Fig. 7] illustre schématiquement un algorithme implémenté par le récepteur, dans un mode de réalisation ;
[Fig. 8] fournit une table de conversion ;
[Fig. 9] illustre schématiquement un algorithme d'une opération de détermination des informations de phase de branchement des compteurs électrique intelligents qui est initiée par le concentrateur de données ;
[Fig. 10] illustre schématiquement des interactions entre couches protocolaires dans un transmetteur pour une transmission de trame par communications par courants porteurs en ligne ; et
[Fig. 11] illustre schématiquement des interactions entre couches protocolaires dans un récepteur pour une réception de trame par communications par courants porteurs en ligne.

### EXPOSE DETAILLE DE MODES DE REALISATION

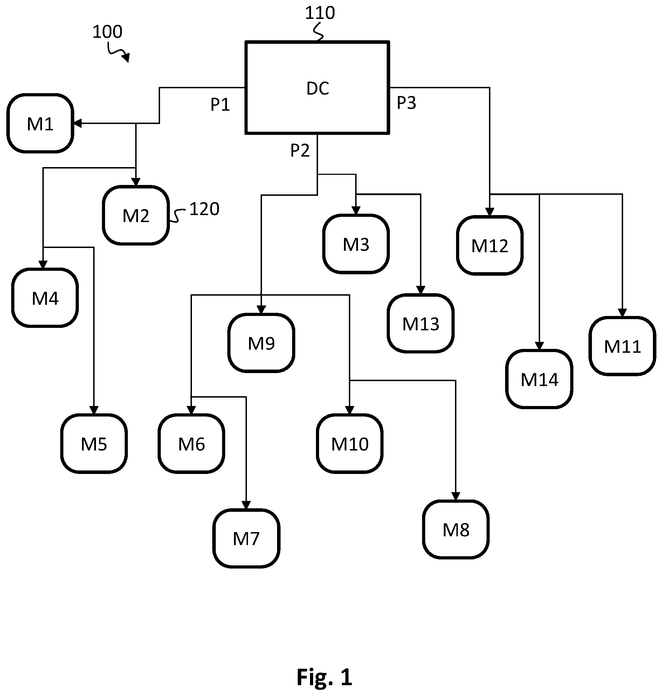

La **Fig. 1** illustre schématiquement un exemple d'infrastructure de distribution électrique 100 comportant un concentrateur de données DC 110 situé dans un sous-répartiteur électrique distribuant de l'énergie électrique à un ensemble d'installations électriques (non représentées) supervisées par des compteurs électriques intelligents respectifs M1,..., M14 120.

Les compteurs électriques intelligents M1, M2, M4, M5 120 sont physiquement connectés à la phase 1 (P1) à laquelle est également connecté le concentrateur de données DC 110.

Les compteurs électriques intelligents M3, M6, M7, M8, M9, M10, M13 120 sont physiquement connectés à la phase 2 (P2) à laquelle est également connecté le concentrateur de données DC 110.

Les compteurs électriques intelligents M11, M12, M14 120 sont physiquement connectés à la phase 3 (P3) à laquelle est également connecté le concentrateur de données DC 110.

L'exemple d'infrastructure 100 de la Fig. 1 est purement illustratif et une autre répartition des compteurs électriques intelligents sur les 3 phases électriques peut être mise en place, notamment pour une meilleure répartition de charge de la distribution électrique.

Les compteurs électriques intelligents 120 représentés ici sont monophasés. Les compteurs électriques intelligents 120 peuvent aussi être polyphasés (biphasés, triphasés).

Le concentrateur de données DC 110 et chaque compteur électrique intelligent 120 comportent un mécanisme de détection de passage à zéro (ZC, « Zero Crossing » en anglais), en front montant, du signal électrique alternatif, ainsi qu'un compteur de détection de phase (PDC, « Phase Detection Counter » en anglais) synchronisé sur le passage à zéro, en front montant, du signal électrique alternatif, comme présenté au §8.10 des spécifications « Narrowband OFDM PLC specifications for G3-PLC networks », mars 2022.

Du point de vue des communications, le concentrateur de données DC 110 gère un réseau PAN (« Personal Area Network » en anglais) auquel les compteurs électriques intelligents 120 sont rattachés. Le concentrateur de données DC 110 et les compteurs électriques intelligents 120 forment des dispositifs nœuds du réseau PAN. Préférentiellement, le réseau PAN dispose d'un identifiant PANId qui lui est propre. Pour réaliser ces communications, le concentrateur de données DC 110 et chaque compteur électrique intelligent 120 sont hybrides, c'est-à-dire qu'ils disposent d'une interface de communication par courants porteurs en ligne et d'une interface de communication sans-fil par radiofréquences.

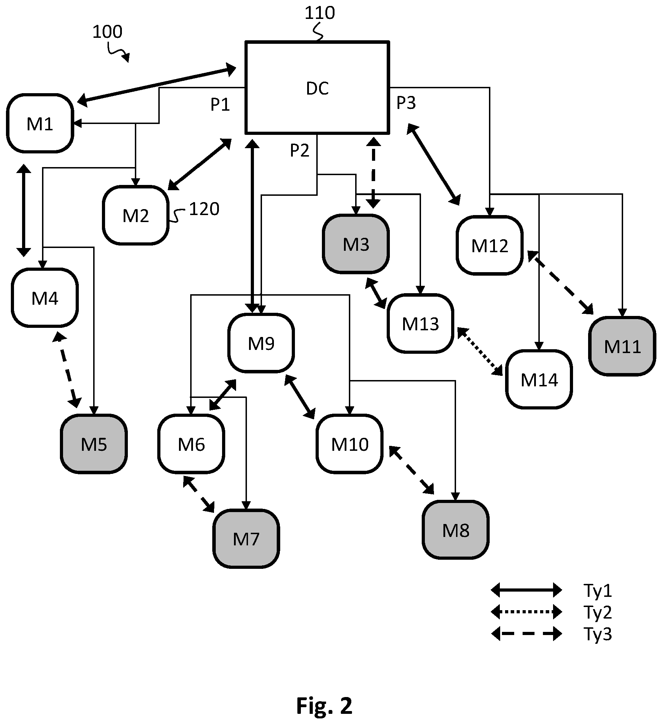

Ainsi, la **Fig. 2** illustre schématiquement des communications établies dans l'infrastructure de distribution électrique 100.

Dans l'exemple de la Fig. 2, les compteurs électriques intelligents M1, M2, M9, M12 120 communiquent directement avec le concentrateur de données DC 110 en utilisant des communications directes par courants porteurs en ligne. Et le compteur électrique intelligent M3 120 communique directement avec le concentrateur de données DC 110 en utilisant des communications sans-fil par radiofréquences.

Pour communiquer avec le concentrateur de données DC 110, le compteur électrique intelligent M4 120 utilise un voisin, le compteur électrique intelligent M1 120, comme intermédiaire, par le biais de communications directes par courants porteurs en ligne.

Pour communiquer avec le concentrateur de données DC 110, le compteur électrique intelligent M5 120 utilise un voisin, le compteur électrique intelligent M4 120, comme intermédiaire, par le biais de communications sans-fil par radiofréquences.

Pour communiquer avec le concentrateur de données DC 110, les compteurs électriques intelligents M6, M10 120 utilisent un voisin, le compteur électrique intelligent M9 120, comme intermédiaire, par le biais de communications directes par courants porteurs en ligne.

Pour communiquer avec le concentrateur de données DC 110, le compteur électrique intelligent M7 120 utilise un voisin, le compteur électrique intelligent M6 120, comme intermédiaire, par le biais de communications sans-fil par radiofréquences.

Pour communiquer avec le concentrateur de données DC 110, le compteur électrique intelligent M8 120 utilise un voisin, le compteur électrique intelligent M10 120, comme intermédiaire, par le biais de communications sans-fil par radiofréquences.

Pour communiquer avec le concentrateur de données DC 110, le compteur électrique intelligent M13 120 utilise un voisin, le compteur électrique intelligent M3 120, comme intermédiaire, par le biais de communications directes par courants porteurs en ligne.

Pour communiquer avec le concentrateur de données DC 110, le compteur électrique intelligent M14 120 utilise un voisin, le compteur électrique intelligent M13 120, comme intermédiaire, par le biais de communications par courants porteurs en ligne par diaphonie (les compteurs électriques intelligents M13 et M14 ne sont pas branchés sur la même phase électrique fournie par le concentrateur de données DC 110).

Pour communiquer avec le concentrateur de données DC 110, le compteur électrique intelligent M11 120 utilise un voisin, le compteur électrique intelligent M12 120, comme intermédiaire, par le biais de communications sans-fil par radiofréquences.

Comme montré sur la Fig. 2, différents types de communications peuvent être établis au sein de l'infrastructure de distribution électrique 100 : un premier type (Ty1) en communications directes par courants porteurs en ligne, un deuxième type (Ty2) en communications par courants porteurs en ligne par diaphonie, et un troisième type (Ty3) en communications sans-fil par radiofréquences.

À noter que cette configuration de communication est dynamique et peut évoluer dans le temps (par exemple, en fonction de l'évolution du bruit environnant). Ainsi, la Fig. 2 correspond à une photographie de l'état du réseau PAN à une période donnée que l'on suppose suffisamment stable pour dérouler les algorithmes en émission et réception décrits ci-après.

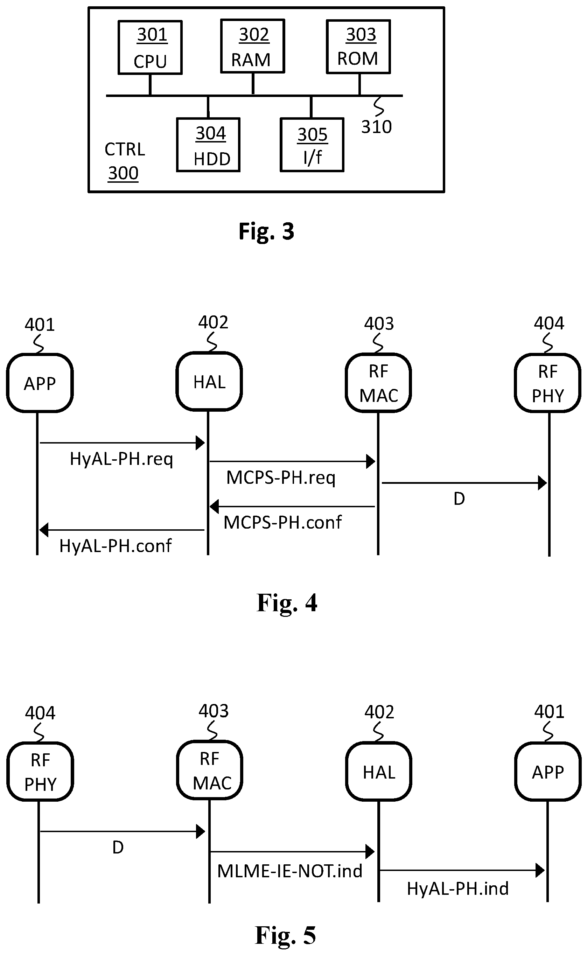

La **Fig. 3** illustre schématiquement un exemple de plateforme matérielle de contrôleur CTRL 300 utilisable dans le concentrateur de données DC 110 et les compteurs électriques intelligents 120.

La plateforme matérielle comporte, reliés par un bus de communication 310 : un processeur ou CPU (« Central Processing Unit » en anglais) 301 ; une mémoire vive RAM (« Random-Access Memory » en anglais) 302 ; une mémoire morte 303, par exemple de type ROM (« Read Only Memory » en anglais) ou EEPROM (« Electrically-Erasable Programmable ROM » en anglais), telle qu'une mémoire Flash ; une unité de stockage, telle qu'un disque dur HDD (« Hard Disk Drive » en anglais) 304, ou un lecteur de support de stockage, tel qu'un lecteur de cartes SD (« Secure Digital » en anglais) ; et un gestionnaire d'interfaces I/f 305.

Le gestionnaire d'interfaces I/f 305 permet au contrôleur CTRL 300 d'interagir avec des équipements du dispositif, concentrateur de données DC 110 ou compteur électrique intelligent 120, dans lequel le contrôleur CTRL 300 s'inscrit (paramétrage, relève de consommation, détection de passage à zéro du signal électrique alternatif...). Le gestionnaire d'interfaces I/f 305 permet au contrôleur CTRL 300 d'établir des communications par courants porteurs en ligne et des communications sans-fil par radiofréquences.

Le processeur 301 est capable d'exécuter des instructions qui forment un programme d'ordinateur (produit programme d'ordinateur) et qui sont chargées dans la mémoire vive 302 à partir de la mémoire morte 303, d'une mémoire externe (304), d'un support de stockage (tel qu'une carte SD), ou d'un réseau de communication. Lorsque la plateforme matérielle est mise sous tension, le processeur 301 est capable de lire de la mémoire vive 302 les instructions précitées et de les exécuter. Quand elles sont lues (depuis la mémoire vive 302 ou un support de stockage) et exécutées par le processeur 301, ces instructions (qui forment un programme d'ordinateur) entraînent l'exécution, par le processeur 301, de tout ou partie des étapes, procédés et fonctionnements décrits ici.

Tout ou partie des étapes, procédés et fonctionnements décrits ici peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié, par exemple un composant FPGA (« Field Programmable Gate Array » en anglais) ou ASIC (« Application Specific Integrated Circuit » en anglais).

D'une manière générale, le concentrateur de données DC 110 et les compteurs électriques intelligents 120 comportent de la circuiterie électronique adaptée et configurée pour implémenter les fonctionnements, procédés et étapes décrits ici.

La **Fig. 4** illustre schématiquement des interactions entre couches protocolaires dans un transmetteur pour une transmission de trame par communications radiofréquences à destination d'un récepteur, cette trame étant destinée à permettre au récepteur de déterminer sur quelle phase de l'infrastructure de distribution électrique 100 le récepteur est branché.

Le transmetteur, tout comme le récepteur, comporte une couche applicative APP 401 (ou couche supérieure, « upper layer » en anglais) et une couche et d'abstraction hybride HAL (« Hybrid Abstraction Layer » en anglais) 402.

Pour les communications sans-fil par radiofréquences, le transmetteur, tout comme le récepteur, comporte une couche de contrôle d'accès au medium MAC (« Medium Access Control » en anglais) 403 dédiée aux communications sans-fil par radiofréquences et une couche physique PHY 404 dédiée aux communications sans-fil par radiofréquences.

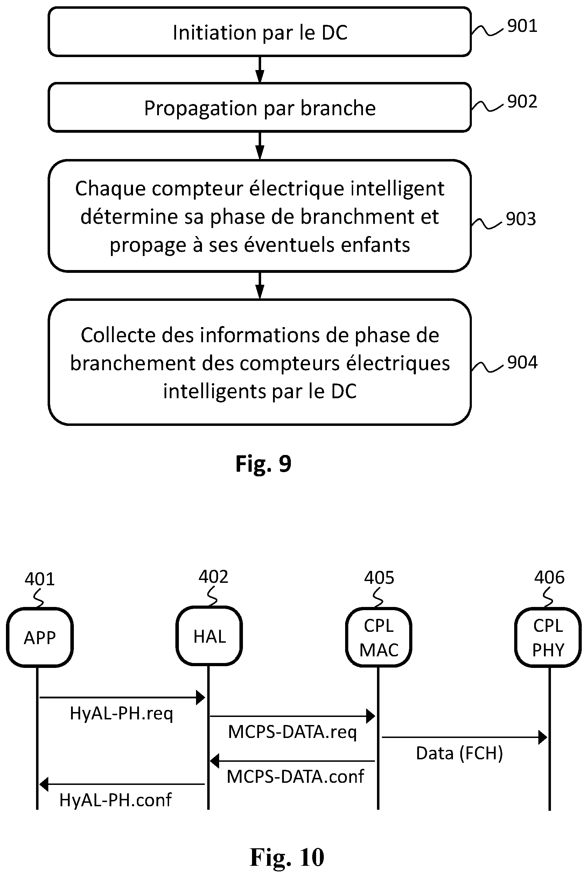

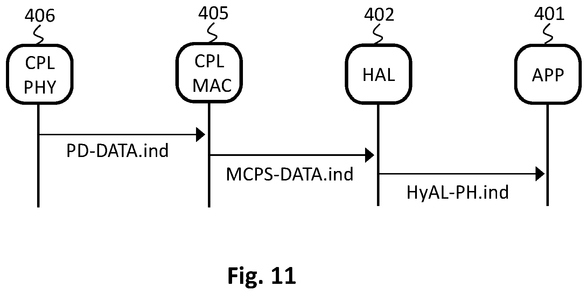

Pour les communications par courants porteurs en ligne, le transmetteur, tout comme le récepteur, comporte une couche de contrôle d'accès au medium dédiée aux communications par courants porteurs en ligne et une couche physique dédiée aux communications par courants porteurs en ligne. Cet aspect est repris ci-après en relation avec les Figs. 10 et 11.

La couche d'abstraction hybride HAL 402 chapeaute la couche de contrôle d'accès au medium MAC 403 dédiée aux communications sans-fil par radiofréquences et la couche de contrôle d'accès au medium dédiée aux communications par courants porteurs en ligne. Lorsque les communications s'effectuent par courants porteurs en ligne, la couche d'abstraction hybride HAL 402 interagit, pour le compte de la couche applicative APP 401, avec la couche de contrôle d'accès au medium dédiée aux communications par courants porteurs en ligne. Et lorsque les communications s'effectuent sans-fil par radiofréquences, la couche d'abstraction hybride HAL 402 interagit, pour le compte de la couche applicative APP 401, avec la couche de contrôle d'accès au medium MAC 403 dédiée aux communications sans-fil par radiofréquences.

Ci-après sont décrites des interactions relatives à des communications sans-fil par radiofréquences.

La couche applicative 401, par le biais d'une primitive HyAL-PH.request (notée HyAL-PH.req sur la Fig. 4) demande à la couche d'abstraction hybride HAL 402 une transmission d'une trame, par communications par radiofréquences, destinée à permettre au récepteur de déterminer la phase sur laquelle est branché ledit récepteur dans l'infrastructure de distribution électrique 100. Au niveau de la couche applicative 401, le transmetteur connaît la phase sur laquelle est branché ledit transmetteur dans l'infrastructure de distribution électrique 100 et cette information est fournie dans la primitive HyAL-PH.request. Préférentiellement, le transmetteur sait si ledit transmetteur subit une inversion phase-neutre ou une rotation de phase, et cette information peut être fournie dans la primitive HyAL-PH.request afin de permettre au récepteur de déterminer si lui-même subit une inversion phase-neutre ou une rotation de phase.

Il convient de noter que, par installation et configuration, le concentrateur de données DC 110 sait que sa phase de branchement dans l'infrastructure de distribution électrique 100 est la phase P1 (Phase = 1), et qu'en outre, il ne subit pas d'inversion phase-neutre ou de rotation de phase. Le concentrateur de données DC 110 est la référence du réseau électrique, à partir de laquelle la détermination de voisin en voisin des phases de branchement des compteurs électriques intelligents 120 peut s'opérer comme décrit ici.

Puis, la couche d'abstraction hybride HAL 402 demande à la couche de contrôle d'accès au medium MAC 403, par le biais d'une primitive MCPS-PH.request (notée MCPS-PH.req sur la Fig. 4), la transmission par communications par radiofréquences de la trame destinée à permettre au récepteur de déterminer la phase sur laquelle est branché ledit récepteur dans l'infrastructure de distribution électrique 100. Préférentiellement, la couche d'abstraction hybride HAL 402 utilise une option IE (« Information Element » en anglais) de la couche de contrôle d'accès au medium MAC 403 dédiée aux communications par radiofréquences. L'option IE est une structure de données définie dans les spécifications « Narrowband OFDM PLC specifications for G3-PLC networks », mars 2022. Par exemple, la couche d'abstraction hybride HAL 402 peut utiliser un identifiant de type « G3-PLC Header IE Sub ID » égal à 0x04. Cette primitive instruit la couche de contrôle d'accès au medium MAC 403 de construire la trame destinée à permettre au récepteur de déterminer la phase sur laquelle est branché ledit récepteur dans l'infrastructure de distribution électrique 100 et d'y inclure, dans un champ PH-IE, un horodatage basé sur la valeur du compteur de détection de phase, ainsi que sur un délai prédéterminé de traitement des trames à l'émission (propre à l'implémentation du transmetteur), et d'y inclure aussi l'information de phase sur laquelle est branché ledit transmetteur dans l'infrastructure de distribution électrique 100, et le cas échéant, l'information d'éventuelle inversion phase-neutre ou d'éventuelle rotation de phase.

Plus particulièrement, le délai prédéterminé de traitement de trames en transmission correspond à un temps fixe entre la lecture de la valeur du compteur de détection de phase par la couche de contrôle d'accès au medium MAC 403 dédiée aux communications sans-fil par radiofréquences et la transmission de ladite trame par la couche physique PHY 404 dédiée aux communications sans-fil par radiofréquences (typiquement l'instant de sortie du premier bit du premier octet de la trame transmise).

La couche de contrôle d'accès au medium MAC 403 instruit alors la couche physique PHY 404 de transmettre la trame destinée à permettre au récepteur de déterminer la phase sur laquelle est branché ledit récepteur dans l'infrastructure de distribution électrique 100, incluant des données D correspondant à la trame construite par la couche de contrôle d'accès au medium MAC 403. La couche physique PHY 404 y ajoute typiquement des données (entêtes...) et signaux (préambule...) propres aux transmissions au niveau physique. La couche de contrôle d'accès au medium MAC 403 instruit la couche physique PHY 404 de transmettre la trame destinée à permettre de déterminer la phase sur laquelle est branché ledit récepteur dans l'infrastructure de distribution électrique 100, en appliquant un temps constant après une phase d'évaluation de canal libre CCA (« Clear Channel Assessment » en anglais), c'est-à-dire sans application d'aléa temporel avant la transmission, et sans rejeu (« retry » en anglais). Cela permet de respecter le délai prédéterminé de traitement des trames à l'émission (propre à l'implémentation du transmetteur) qui a été mentionné ci-dessus et dont tient compte l'horodatage généré par la couche de contrôle d'accès au medium MAC 403.

Ensuite, une primitive MCPS-PH.confirm (notée MCPS-PH.conf sur la Fig. 4) est appelée par la couche de contrôle d'accès au medium MAC 403 pour informer la couche d'abstraction hybride HAL 402 du résultat de la transmission, par communications sans-fil par radiofréquences, de la trame destinée à permettre au récepteur de déterminer la phase sur laquelle est branché ledit récepteur dans l'infrastructure de distribution électrique 100.

Ensuite, une primitive HyAL-PH.confirm (notée HyAL-PH.conf sur la Fig. 4) est appelée par la couche d'abstraction hybride HAL 402 pour informer la couche applicative APP 401 du résultat de la transmission, par communications sans-fil par radiofréquences, de la trame destinée à permettre au récepteur de déterminer la phase sur laquelle est branché ledit récepteur dans l'infrastructure de distribution électrique 100.

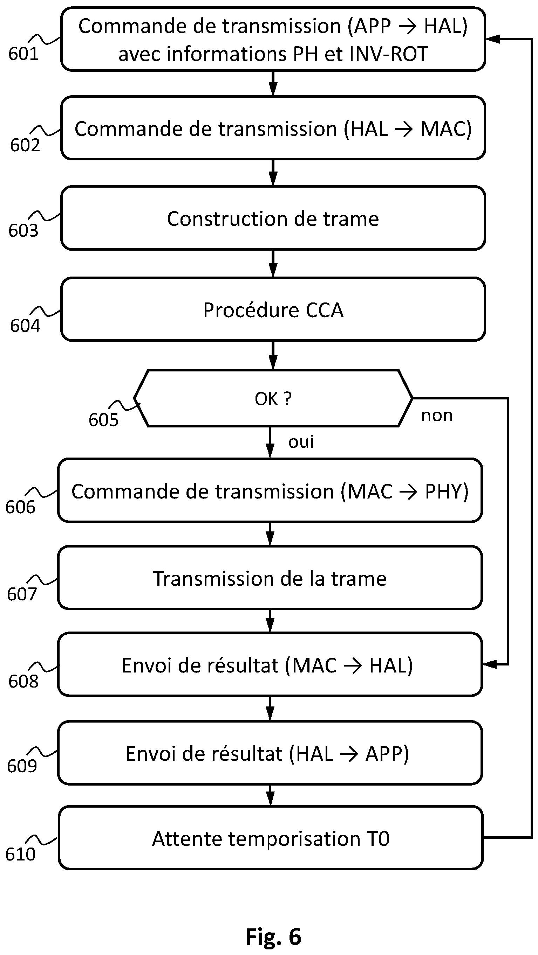

Un mode de réalisation d'opérations réalisées à l'émission de la trame destinée à permettre au récepteur de déterminer la phase sur laquelle est branché ledit récepteur dans l'infrastructure de distribution électrique 100 est présenté ci-après en relation avec la Fig. 6.

Par exemple, la primitive HyAL-PH.request comporte les paramètres suivants :
- Phase, indiquant sur quelle phase est branché le transmetteur dans l'infrastructure de distribution électrique 100 ;
- et éventuellement, PhaseInvRot, indiquant si le transmetteur subit une inversion phase-neutre ou une rotation de phase.

Alors, la primitive HyAL-PH.request indique implicitement que la trame en question doit être transmise avec une adresse source identifiant le transmetteur et une adresse de destination de type diffusion (« broadcast » en anglais, *e.g.*, DstAddr = 0xFFFF), c'est-à-dire destinée à tout voisin du transmetteur dans le réseau PAN.

Dans un mode de réalisation préférentiel, la primitive HyAL-PH.request comporte les paramètres suivants :
SrcAddrMode, qui est un paramètre qui indique si la trame fournit une adresse du transmetteur comme adresse source, et le cas échéant, quel est le format de cette adresse source (*e.g.*, adresse complète sur 64 bits ou adresse raccourcie su 16 bits) ;
- DstAddrMode, qui est un paramètre qui indique si la trame fournit une adresse de destination, et le cas échéant, quel est le format de cette adresse de destination (*e.g.*, adresse complète sur 64 bits ou adresse raccourcie su 16 bits) ;
- DstPANId, qui est un paramètre qui indique un identifiant de réseau PAN auquel est adressé la trame ; et
- DstAddr, qui est un paramètre qui fournit une adresse de destination, lorsque le DstAddrMode indique que la trame fournit une telle adresse de destination ;
- MediaType, qui indique si la trame en question doit être transmise par communications par courants porteurs en ligne et/ou par communications sans-fil par radiofréquences ;
- Phase, et
- et éventuellement, PhaseInvRot.

La primitive HyAL-PH.request comporte en outre préférentiellement les paramètres SecurityLevel, KeyIdMode, KeySource et KeyIndex, tels qu'utilisés dans les spécifications « Narrowband OFDM PLC specifications for G3-PLC networks », mars 2022.

Par exemple, le paramètre Phase est codé sur 2 bits, avec la valeur « 0 » lorsque le paramètre ne contient pas d'information significative, la valeur « 1 » lorsque le transmetteur est branché sur la phase P1 de l'infrastructure de distribution électrique 100, la valeur « 2 » lorsque le transmetteur est branché sur la phase P2 de l'infrastructure de distribution électrique 100, et la valeur « 3 » lorsque le transmetteur est branché sur la phase P3 de l'infrastructure de distribution électrique 100.

Par exemple, le paramètre Inv-Phase-Rot est un booléen qui vaut VRAI (bit à « 1 ») lorsque le transmetteur subit une inversion phase-neutre ou une rotation de phase (dispositif polyphasé) et qui vaut « FAUX » dans le cas contraire.

Par exemple, la primitive MCPS-PH.request comporte les paramètres suivants :
- SrcAddrMode ;
- DstAddrMode ;
- DstPANId ;
- DstAddr ;
- Phase ;
- et éventuellement, Phase-Inv-Rot.

La primitive MCPS-PH.request comporte en outre préférentiellement les paramètres SecurityLevel, KeyIdMode, KeySource et KeyIndex.

Par exemple, la primitive MCPS-PH.confirm a la même sémantique et comporte les mêmes paramètres que la primitive MCPS-DATA.confirm telle qu'utilisée dans les spécifications « Narrowband OFDM PLC specifications for G3-PLC networks », mars 2022. Et la primitive HyAL-PH.confirm comporte les paramètres « Status » et « TimeStamp », que l'on retrouve dans ladite primitive MCPS-DATA.confirm.

Par exemple, l'option IE comporte les champs de contenu PH-IE suivants :
- PDC, qui indique une valeur de compteur de détection de phase (uniquement significatif pour une trame destinée à permettre au récepteur de déterminer la phase sur laquelle est branché ledit récepteur dans l'infrastructure de distribution électrique 100 et transmise en communications sans-fil par radiofréquences) ; et
- PhaseDifferential (ou PDiff), qui fournit une information représentative d'un différentiel de phase (uniquement significatif à partir de la couche de contrôle d'accès au medium MAC 403 en réception) ;
- PH, qui fournit une information de phase sur laquelle est branché le dispositif nœud en question ; et
- éventuellement, INV-ROT, qui fournit une information d'inversion de phase ou rotation de phase que subit éventuellement le dispositif nœud en question.

Par exemple, l'information PhaseDifferential est codé sur 3 bits, avec les valeurs suivantes :
- 0 : nœud récepteur et nœud transmetteur en phase ;
- 1 : nœud récepteur en avance de phase de 60° par rapport au nœud transmetteur ;
- 2 : nœud récepteur en avance de phase de 120° par rapport au nœud transmetteur ;
- 3 : nœud récepteur et nœud transmetteur en opposition de phase ;
- 4 : nœud transmetteur en avance de phase de 120° par rapport au nœud récepteur ;
- 5 : nœud transmetteur en avance de phase de 60° par rapport au nœud récepteur ;
- 6 : échec de calcul de différentiel de phase ;
- 7 : non significatif, potentiellement réservé pour un usage futur.

Par exemple, à l'émission, le champ PhaseDifferential prend la valeur 0.

Par exemple, les champs PH et INV-ROT sont codés respectivement comme les paramètres Phase et PhaseInvRot susmentionnés.

La **Fig. 5** illustre schématiquement des interactions entre couches protocolaires dans le récepteur pour une réception de la trame transmise par le transmetteur en application des interactions entre couches protocolaires décrites ci-dessus en relation avec la Fig. 4.

La couche physique PHY 404 dédiée aux communications par radiofréquences reçoit la trame en question, destinée à permettre au récepteur de déterminer la phase sur laquelle est branché ledit récepteur dans l'infrastructure de distribution électrique 100.

La couche physique PHY 404 fait ainsi remonter à la couche de contrôle d'accès au medium MAC 403 les données D que, côté transmetteur, la couche de contrôle d'accès au medium MAC 403 a fournies à la couche physique PHY 404 pour la transmission de la trame en question.

La couche de contrôle d'accès au medium MAC 403 utilise les données D pour effectuer un calcul de différentiel de phase, et remonte le résultat du calcul de différentiel de phase à la couche d'abstraction hybride HAL 402 par le biais d'une primitive MLME-IE-NOTIFY.indication (notée MLME-IE-NOT.ind sur la Fig. 5). Ce calcul de différentiel de phase fournit un éventuel écart de phase entre le transmetteur et le récepteur, qui permet ensuite au récepteur, avec en outre l'information de phase sur laquelle est branché le transmetteur dans l'infrastructure de distribution électrique 100, de déterminer la phase sur laquelle est branché le récepteur dans l'infrastructure de distribution électrique 100. Par exemple, la primitive MLME-IE-NOTIFY.indication reprend la structure de la primitive du même nom dans les spécifications « Narrowband OFDM PLC specifications for G3-PLC networks », mars 2022. Préférentiellement, ladite couche de contrôle d'accès au medium MAC 403 modifie l'option IE de la trame reçue pour y inclure une information représentative de l'éventuel écart de phase (dans le champ PhaseDifferential (ou PDiff) tel que mentionné en relation avec la Fig. 4), ainsi que l'information de phase sur laquelle est branché le transmetteur dans l'infrastructure de distribution électrique 100, et le cas échéant, l'information d'éventuelle inversion phase-neutre ou de rotation de phase, telles que transmises par le transmetteur dans ladite trame.

Ensuite, la couche d'abstraction hybride HAL 402 remonte l'information représentative de l'éventuel écart de phase à la couche applicative APP 401 par le biais d'une primitive HyAL-PH.indication (notée HyAL-PH.ind sur la Fig. 5), ainsi que l'information de phase sur laquelle est branché le transmetteur dans l'infrastructure de distribution électrique 100, et le cas échéant, l'information d'éventuelle inversion phase-neutre ou de rotation de phase, telles que transmises par le transmetteur dans ladite trame.

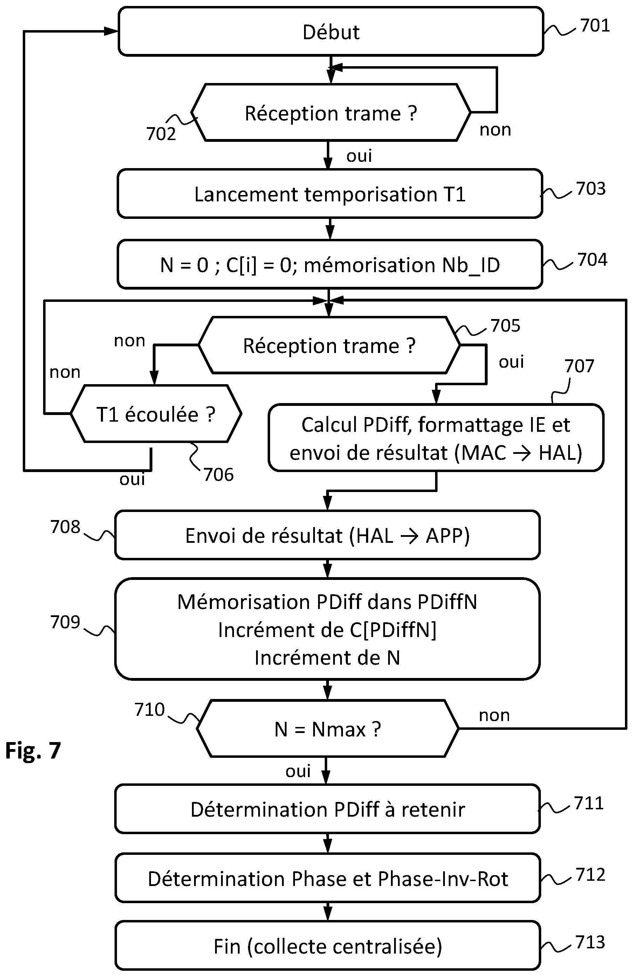

Un mode de réalisation d'opérations réalisées à la réception de la trame destinée à permettre de déterminer la phase sur laquelle est branché le récepteur dans l'infrastructure de distribution électrique 100 est présenté ci-après en relation avec la Fig. 7.

Par exemple, la primitive HyAL-PH.indication comporte les paramètres suivants :
- SrcAddrMode ;
- SrcPANId, qui est un paramètre qui indique un identifiant de réseau PAN d'où la trame est originaire ;
- SrcAddr ;
- DstAddrMode ;
- DstPANId ;
- DstAddr ;
- MediaType, qui indique si les informations fournies proviennent d'une trame reçue par communications par courants porteurs en ligne et/ou d'une trame reçue par communications sans-fil par radiofréquences ;
- PhaseDifferential ;
- Phase,
- et éventuellement, PhaseInvRot.

Dans un mode de réalisation particulier, le récepteur reçoit une trame destinée à permettre au récepteur de déterminer sur quelle phase est branché le récepteur dans l'infrastructure de distribution électrique, à la fois par communications sans-fil par radiofréquences et par communications par courants porteurs en ligne (lorsque le paramètre MediaType vaut 0x02 par exemple). Dans ce cas, la couche d'abstraction hybride HAL 402 peut ne faire appel qu'une seule fois à la primitive HyAL-PH.indication pour les deux trames reçues, après avoir reçu confirmation de la couche de contrôle d'accès au medium MAC 403 dédiée aux communications sans-fil par radiofréquences et de la couche de contrôle d'accès au medium dédiée aux communications par courants porteurs en ligne.

La **Fig. 6** illustre schématiquement un algorithme implémenté par le transmetteur, dans un mode de réalisation.

Dans une étape 601, la couche applicative 401 du transmetteur commande, à la couche d'abstraction hybride HAL 402 dudit transmetteur, une transmission d'une trame destinée à permettre à un récepteur de déterminer sur quelle phase le récepteur est branché dans l'infrastructure de distribution électrique 100. La transmission doit être ici réalisée grâce à une communication sans-fil par radiofréquences. La couche applicative 401 du transmetteur fournit à la couche d'abstraction hybride HAL 402 une information sur la phase sur laquelle est branché ledit transmetteur dans l'infrastructure de distribution électrique 100, et préférentiellement, une information sur une éventuelle inversion phase-neutre ou rotation de phase subie par le transmetteur. La primitive HyAL-PH.request susmentionnée peut être utilisée pour ce faire.

Dans une étape 602, la couche d'abstraction hybride HAL 402 du transmetteur commande à son tour, à la couche de contrôle d'accès au medium MAC 403 (dédiée aux communications sans-fil par radiofréquences) dudit transmetteur, de transmettre la trame destinée à permettre à un récepteur de déterminer la phase sur laquelle le récepteur est branché dans l'infrastructure de distribution électrique 100. La primitive MCPS-PH.request susmentionnée peut être utilisée pour ce faire.

Dans une étape 603, ladite couche de contrôle d'accès au medium MAC 403 du transmetteur construit la trame destinée à permettre à un récepteur de déterminer la phase sur laquelle le récepteur est branché dans l'infrastructure de distribution électrique 100. La trame en question inclut un horodatage basé sur la valeur du compteur de détection de phase au moment où la trame doit être transmise par la couche physique PHY 404 (dédiée aux communications sans-fil par radiofréquences) dudit transmetteur, ainsi qu'un délai prédéterminé de traitement des trames à l'émission (propre à l'implémentation du transmetteur). La trame en question inclut en outre l'information sur la phase sur laquelle est branché ledit transmetteur dans l'infrastructure de distribution électrique 100, et le cas échéant, l'information sur une éventuelle inversion phase-neutre ou rotation de phase subie par le transmetteur.

Ainsi, contrairement au mécanisme de détection de phase dans le cadre de communications par courants porteurs en ligne (tel que décrit au paragraphe 8.10 des spécifications « Narrowband OFDM PLC specifications for G3-PLC networks », mars 2022) où la lecture du compteur de détection de phase est faite par la couche physique (des communications par courants porteurs en ligne), la lecture du compteur de détection de phase est faite par la couche de contrôle d'accès au medium MAC 403 dans le cadre des communications sans-fil par radiofréquences.

Dans un mode de réalisation particulier, l'horodatage en question, noté ici Tx_PDC, est obtenu de la façon suivante : $Tx _ PDC = PDC + \left(Tx_D\times PDC_Freq\right)$ où PDC est ladite valeur du compteur de détection de phase, Tx_D est ledit délai prédéterminé de traitement des trames à l'émission (propre à l'implémentation du transmetteur), et PDC_Freq est la fréquence du compteur de détection de phase (soit, pour un compteur sur 8 bits, 12.8 kHz pour une fréquence de signal électrique alternatif de 50 Hz et 15.36 kHz pour une fréquence de signal électrique alternatif de 60 Hz).

Préférentiellement, la trame est construite avec l'option IE susmentionnée.

Dans une étape 604, ladite couche de contrôle d'accès au medium MAC 403 du transmetteur effectue une procédure de vérification de canal libre CCA.

Dans une étape 605, ladite couche de contrôle d'accès au medium MAC 403 du transmetteur vérifie que le canal est effectivement libre. Si tel est le cas, une étape 606 est effectuée ; sinon, une étape 608 est effectuée.

Dans l'étape 606, ladite couche de contrôle d'accès au medium MAC 403 du transmetteur fournit à la couche physique PHY 404 (dédiée aux communications sans-fil par radiofréquences) du transmetteur les données D à transmettre. Contrairement aux transmissions des trames qui ne sont pas destinées à permettre à un récepteur de déterminer la phase sur laquelle est branché ledit récepteur dans l'infrastructure de distribution électrique 100, aucun aléa temporel (délai aléatoire) n'est appliqué à l'issue de la procédure de vérification de canal libre CCA. La transmission est effectuée à délai fixe. Dans l'éventualité où ce délai fixe ne peut pas être respecté, alors la transmission est annulée. Aucun rejeu (« retry » en anglais) n'est appliqué.

Ainsi, dans une étape 607, la couche physique PHY 404 du transmetteur réalise la transmission par une communication sans-fil par radiofréquences, puis l'étape 608 est effectuée.

Dans l'étape 608, ladite couche de contrôle d'accès au medium MAC 403 du transmetteur envoie le résultat de la transmission à ladite couche d'abstraction hybride HAL 402 du transmetteur. La primitive MCPS-PH.confirm susmentionnée peut être utilisée pour ce faire.

Dans une étape 609, ladite couche d'abstraction hybride HAL 402 du transmetteur envoie le résultat de la transmission à ladite couche applicative APP 401 du transmetteur. La primitive HyAL-PH.confirm susmentionnée peut être utilisée pour ce faire.

Dans une étape 610, ladite couche applicative APP 401 du transmetteur attend qu'une temporisation de durée prédéterminée T0 soit écoulée avant de renouveler l'étape 601. La durée T0 peut être programmable, et est par exemple égale à 60 secondes.

La **Fig. 7** illustre schématiquement un algorithme implémenté par un récepteur d'une trame destinée à permettre audit récepteur de déterminer la phase sur laquelle ledit récepteur est branché dans l'infrastructure de distribution électrique 100, dans un mode de réalisation.

L'algorithme démarre dans une étape 701.

Dans une étape 702, la couche de contrôle d'accès au medium MAC 403 du récepteur vérifie si une trame destinée à permettre au récepteur de déterminer la phase sur laquelle ledit récepteur est branché dans l'infrastructure de distribution électrique 100 est reçue en provenance d'un voisin (transmetteur de la trame en question). Si tel est le cas, la couche de contrôle d'accès au medium MAC 403 du récepteur mémorise un identifiant du transmetteur (par exemple, son adresse SrcAddr dans le réseau PAN) et une indication de réception de la trame est remontée jusqu'à la couche applicative APP 401 du récepteur, et une étape 703 est effectuée ; sinon, l'algorithme boucle sur l'étape 702.

Dans l'étape 703, la couche applicative APP 401 du récepteur lance une temporisation de durée prédéterminée T1. La durée T1 peut être programmable et est par exemple de 2 heures.

Dans une étape 704, la couche applicative APP 401 du récepteur effectue des initialisations de variables. Une variable N est initialisée à 0. Chaque entrée d'un tableau de variables C[i], i = 0,..,5, est initialisée à 0. Un identifiant du transmetteur (par exemple, son adresse SrcAddr dans le réseau PAN) est mémorisé. De plus, la couche applicative APP 401 du récepteur initialise une variable PH_R avec l'information de phase sur laquelle est branché ledit transmetteur dans l'infrastructure de distribution électrique 100, et le cas échéant, la couche applicative APP 401 du récepteur initialise une variable INV-ROT_R avec l'information sur une éventuelle inversion phase-neutre ou rotation de phase subie par le transmetteur.

Puis le récepteur se met en attente de recevoir une nouvelle trame, en provenance du voisin en question, qui est destinée à permettre au récepteur de déterminer la phase sur laquelle ledit récepteur est branché dans l'infrastructure de distribution électrique 100. Ainsi, dans une étape 705, la couche de contrôle d'accès au medium MAC 403 du récepteur vérifie si une telle trame est nouvellement reçue en provenance de ce voisin (dont ladite couche de contrôle d'accès au medium MAC 403 a mémorisé l'identifiant à l'étape 702). Si tel est le cas, une étape 707 est effectuée ; sinon, une étape 706 est effectuée.

Dans l'étape 706, la couche applicative APP 401 du récepteur, qui n'a pas été notifiée d'une nouvelle réception de telle trame en provenance du voisin en question, vérifie si la temporisation T1 est écoulée ; si tel est le cas, l'algorithme est relancé depuis le début, à l'étape 701. Un nouveau voisin qui va servir de référentiel pour déterminer la phase sur laquelle ledit récepteur est branché dans l'infrastructure de distribution électrique 100 va alors probablement être sélectionné (réinitialisation et mémorisation de l'identifiant du transmetteur (par exemple, son adresse SrcAddr dans le réseau PAN) à la nouvelle exécution de l'étape 702). Si la temporisation T1 n'est pas écoulée, l'étape 705 est répétée.

Dans l'étape 707, la couche de contrôle d'accès au medium MAC 403 du récepteur détermine un éventuel écart de phase avec le transmetteur. Dans un mode de réalisation particulier, la couche de contrôle d'accès au medium MAC 403 du récepteur calcule l'information PhaseDifferential (PDiff sur la Fig. 7) susmentionnée.

Pour ce faire, la couche de contrôle d'accès au medium MAC 403 du récepteur génère un horodatage basé sur la valeur du compteur de détection de phase au moment où la trame est reçue par ladite couche de contrôle d'accès au medium MAC 403 du récepteur, ainsi que sur un délai prédéterminé de traitement des trames en réception (propre à l'implémentation du récepteur).

Plus particulièrement, le délai prédéterminé de traitement de trames en réception correspond à un temps fixe entre la détection de la trame en question par la couche physique PHY 404 dédiée aux communications sans-fil par radiofréquences (typiquement l'instant de réception par ladite couche physique PHY 404 du premier bit du premier octet de la trame en question) et la lecture de la valeur du compteur de détection de phase par la couche de contrôle d'accès au medium MAC 403 dédiée aux communications sans-fil par radiofréquences.

Dans un mode de réalisation particulier, l'horodatage en question, noté ici Rx_PDC, est obtenu de la façon suivante : $Rx _ PDC = PDC - \left(Rx_D\times PDC_Freq\right)$ où PDC est ladite valeur du compteur de détection de phase, Rx_D est ledit délai prédéterminé de traitement des trames en réception (propre à l'implémentation du récepteur), et PDC_Freq est la fréquence du compteur de détection de phase.

La couche de contrôle d'accès au medium MAC 403 du récepteur calcule alors une différence de compteur de détection de phase entre le transmetteur et le récepteur. En reprenant les notations ci-dessus, cette différence, nommée ici CounterDifferential, est : $CounterDifferential = \left(Rx_PDC-Tx_PDC\right)$ où Tx_PDC est la valeur d'horodatage indiquée par le transmetteur dans la trame reçue, qui est lue par ladite couche de contrôle d'accès au medium MAC 403 dans ladite trame reçue.

Dans un mode de réalisation particulier, lorsque la valeur de CounterDifferential est négative, celle-ci peut être translatée dans le domaine des entiers positifs en lui ajoutant 256 unités.

L'information PhaseDifferential, codée sur 3 bits comme déjà détaillé ci-dessus (valeurs de 0 à 5), peut alors être obtenue de la manière suivante : $PhaseDifferential = R \left(CounterDifferential/60_Deg_PDC\right) % 6$ où R est l'opérateur d'arrondi, 60_Deg_PDC est une constante exprimant 60 degrés par incréments de 256/360^{e} (soit 42.66) et % est l'opérateur modulo.

En outre, dans l'étape 707, la couche de contrôle d'accès au medium MAC 403 du récepteur formatte préférentiellement l'option IE pour y inclure l'information PhaseDifferential ainsi obtenue et alors la transmettre à la couche d'abstraction hybride HAL 402 du récepteur. De plus, la couche de contrôle d'accès au medium MAC 403 du récepteur y inclut l'information de phase sur laquelle est branché ledit transmetteur dans l'infrastructure de distribution électrique 100, et le cas échéant, l'information sur une éventuelle inversion phase-neutre ou rotation de phase subie par le transmetteur. La primitive MLME-IE-NOTIFY.indication peut être utilisée pour ce faire.

Dans une étape 708, la couche d'abstraction hybride HAL 402 du récepteur transmet l'information PhaseDifferential à la couche applicative APP 401 du récepteur, ainsi que l'information de phase sur laquelle est branché ledit transmetteur dans l'infrastructure de distribution électrique 100, et le cas échéant, l'information sur une éventuelle inversion phase-neutre ou rotation de phase subie par le transmetteur. La primitive HyAL-PH.indication peut être utilisée pour ce faire.

Dans une étape 709, la couche applicative APP 401 du récepteur mémorise dans une variable PDiffN la valeur de l'information PhaseDifferential (ou PhDiff). De plus, la couche applicative APP 401 du récepteur incrémente d'une unité la valeur de la variable C[PDiffN]. Enfin, la couche applicative APP 401 du récepteur incrémente d'une unité la valeur de la variable N.

Dans une étape 710, la couche applicative APP 401 vérifie si la variable N a atteint une valeur prédéterminée Nmax (typiquement, Nmax = 100). En d'autres termes, la couche applicative APP 401 cherche à savoir si un nombre suffisant de trames destinées à permettre de déterminer la phase sur laquelle ledit récepteur est branché dans l'infrastructure de distribution électrique 100 a été reçu de la part du voisin considéré. Cela permet d'utiliser une valeur consolidée de l'information PhaseDifferential pour déterminer la phase sur laquelle ledit récepteur est branché dans l'infrastructure de distribution électrique 100. Si tel est le cas, une étape 711 est effectuée ; sinon, l'étape 705 est répétée, dans l'attente de recevoir, de la part du voisin en question, une nouvelle trame destinée à permettre au récepteur de déterminer la phase sur laquelle ledit récepteur est branché dans l'infrastructure de distribution électrique 100.

Dans l'étape 711, la couche applicative APP 401 du récepteur détermine la valeur de l'information PhaseDifferential (ou PhDiff) à retenir. Cette valeur correspond à l'index *i* de la variable C[i] qui présente la valeur maximale parmi les valeurs stockées dans le tableau C.

Dans une étape 712, la couche applicative APP 401 du récepteur détermine sur quelle phase ledit récepteur est branché dans l'infrastructure de distribution électrique 100 à partir de l'information PH_R de phase de branchement du transmetteur et de l'information PhaseDifferential susmentionnée, à savoir la différence entre le l'horodatage fournie par le transmetteur et l'horodatage généré par le récepteur en réception.

Préférentiellement, la couche applicative APP 401 du récepteur détermine en outre si une éventuelle inversion phase-neutre ou une rotation de phase est subie par ledit récepteur à partir de l'information PH_R de phase de branchement du transmetteur, de l'information de phase de branchement du récepteur et de l'information d'éventuelle inversion phase-neutre ou rotation de phase qui a été fournie par le transmetteur.

Dans le cas d'un compteur électrique intelligent biphasé, la couche applicative APP 401 du récepteur détermine sur quelle phase ledit récepteur est branché dans l'infrastructure de distribution électrique 100 à partir de l'information PH_R de phase de branchement du transmetteur et de l'information PhaseDifferential susmentionnée, à savoir la différence entre l'horodatage généré par le récepteur en réception et l'horodatage fourni par le transmetteur, et en outre en fonction de l'information d'éventuelle inversion phase-neutre ou rotation de phase qui a été fournie par le transmetteur.

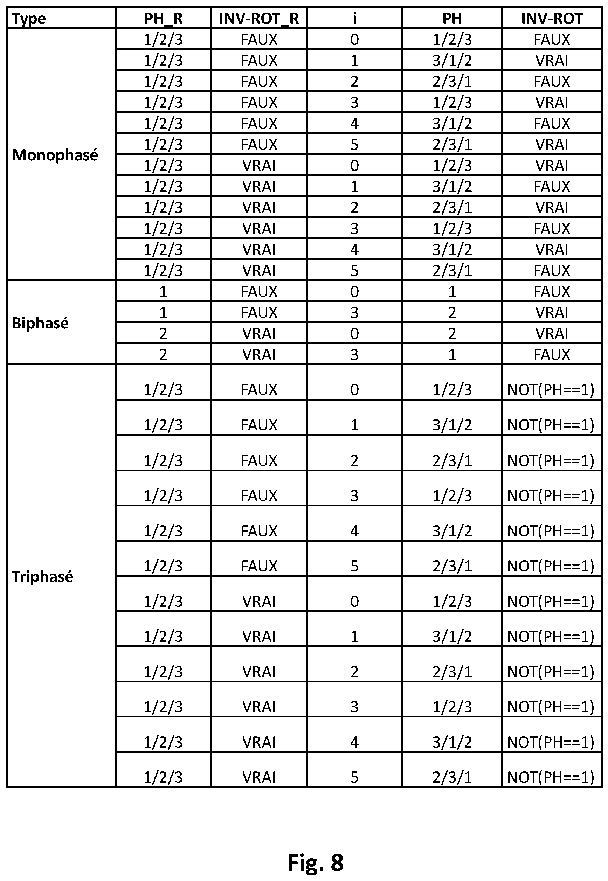

Par exemple, la couche applicative APP 401 utilise une table de conversion comme représenté sur la **Fig. 8**. Selon un autre exemple, des règles de calcul peuvent être établies pour parvenir au même résultat.

Dans une étape 713, il est mis fin à l'algorithme. La couche applicative APP 401 du récepteur peut transmettre l'information de phase sur laquelle ledit récepteur est branché dans l'infrastructure de distribution électrique 100 et le cas échéant l'information d'éventuelle inversion phase-neutre et rotation de phase subie par ledit récepteur, à un autre nœud du réseau PAN. Cet aspect est décrit ci-après en relation avec la Fig. 9.

Il ressort de la description ci-dessus de l'algorithme de la Fig. 7 que le récepteur retient une valeur finale d'éventuel écart de phase avec le transmetteur en retenant la valeur d'éventuel écart de phase qui a été le plus obtenue à partir d'une quantité prédéterminée (Nmax) de trames destinées à permettre de déterminer la phase sur laquelle le récepteur est branché dans l'infrastructure de distribution électrique 100. En variante, le récepteur peut toutefois décider de déterminer la phase sur laquelle le récepteur est branché dans l'infrastructure de distribution électrique 100 à partir d'une seule dite trame.

La **Fig. 9** illustre schématiquement un algorithme d'une opération de détermination des informations de phase de branchement des compteurs électrique intelligents 120 qui est initiée par le concentrateur de données DC 110.

Dans une étape 901, le concentrateur de données DC 110 initie l'opération de détermination des informations de phase de branchement des compteurs électriques intelligents 120. Pour ce faire, le concentrateur de données DC 110 transmet une trame destinée à permettre à tout récepteur de déterminer sur quelle phase ledit récepteur est branché dans l'infrastructure de distribution électrique 100. Lorsqu'au moins un des voisins du concentrateur de données DC 110 lui est connecté par communications sans-fil par radiofréquences, la trame est traitée en émission et en réception comme décrit ci-dessus. Lorsqu'au moins un des voisins du concentrateur de données DC 110 lui est connecté par communications par courants porteurs en ligne, la trame est traitée en émission et en réception comme décrit ci-après en relation avec les Figs. 10 et 11.

Le concentrateur de données DC 110 répète préférentiellement la transmission de telles trames au moins un nombre Nmax de fois.

Dans ces trames, le concentrateur de données DC 110 indique que sa phase de branchement dans l'infrastructure de distribution électrique 100 est la phase P1 (Phase = 1). Dans ces trames, le concentrateur de données DC 110 indique préférentiellement qu'il ne subit pas d'inversion phase-neutre ou de rotation de phase (Phase-Inv-Rot = FAUX).

Dans une étape 902, la propagation de l'opération de détermination des informations de phase de branchement des compteurs électriques intelligents 120 s'effectue par branche de l'infrastructure de distribution électrique 100 à partir du concentrateur de données DC 110.

Ainsi, dans une étape 903, chaque compteur électrique intelligent 120 peut déterminer la phase sur laquelle ledit compteur électrique intelligent 120 est branché dans l'infrastructure de distribution électrique 100 grâce à une ou plusieurs trames dédiées, reçues d'un voisin connecté en amont dans l'infrastructure de distribution électrique 100, et en informer tout compteur électrique intelligent 120 voisin qui lui serait connecté en aval dans l'infrastructure de distribution électrique 100. Lorsqu'au moins un tel voisin du compteur électrique intelligent 120 en question lui est connecté par communications sans-fil par radiofréquences, l'interface de communications sans-fil par radiofréquences est utilisée, comme décrit ci-dessus. Lorsqu'au moins un tel voisin du compteur électrique intelligent 120 en question lui est connecté par communications par courants porteurs en ligne, l'interface de communications par courants porteurs en ligne est utilisée, comme décrit ci-après en relation avec les Figs. 10 et 11.

Chaque compteur électrique intelligent 120 répète préférentiellement la transmission de telles trames au moins un nombre Nmax de fois.

Dans ces trames, le compteur électrique intelligent 120 en question transmet préférentiellement une information indiquant si ledit compteur électrique intelligent 120 subit une inversion phase-neutre ou une rotation de phase.

Ainsi, chaque compteur électrique intelligent 120 est capable de déterminer sur quelle phase ledit compteur électrique intelligent 120 est branché dans l'infrastructure de distribution électrique 100.

Alors dans une étape 904, le concentrateur de données DC 110 collecte de manière centralisée les informations de phases sur lesquelles sont branchés les divers compteurs électriques intelligents 120 dans l'infrastructure de distribution électrique 100. En effectuant une collecte centralisée de ces informations auprès des différents dispositifs nœuds du réseau PAN, le concentrateur de données DC 110 est alors capable de dresser une cartographie des branchements sur les différentes phases du sous-répartiteur électrique.

La **Fig. 10** illustre schématiquement des interactions entre couches protocolaires dans un transmetteur pour une transmission de trame par courants porteurs en ligne à destination d'un récepteur, cette trame étant destinée à permettre au récepteur de déterminer sur quelle phase de l'infrastructure de distribution électrique 100 le récepteur est branché.

Outre la couche applicative APP 401 et la couche et d'abstraction hybride HAL (« Hybrid Abstraction Layer » en anglais) 402 déjà présentées, le transmetteur, tout comme le récepteur, comporte une couche de contrôle d'accès au medium MAC 405 dédiée aux communications par courants porteurs en ligne et une couche physique PHY 406 dédiée aux communications par courants porteurs en ligne.

La couche applicative APP 401, par le biais de la primitive HyAL-PH.request (notée HyAL-PH.req sur la Fig. 10) déjà décrite, demande à la couche d'abstraction hybride HAL 402 une transmission d'une trame, par communications par courants porteurs en ligne, destinée à permettre au récepteur de déterminer la phase sur laquelle est branché ledit récepteur dans l'infrastructure de distribution électrique 100.

Puis, la couche d'abstraction hybride HAL 402 demande à ladite couche de contrôle d'accès au medium MAC 405, par le biais d'une primitive MCPS-DATA.request (notée MCPS-DATA.req sur la Fig. 10), la transmission par communications par courants porteurs en ligne de la trame destinée à permettre au récepteur de déterminer la phase sur laquelle est branché ledit récepteur dans l'infrastructure de distribution électrique 100.

À noter que la primitive MCPS-DATA.request est déjà présente dans les spécifications « Narrowband OFDM PLC specifications for G3-PLC networks », mars 2022, et qu'elle est ici enrichie du paramètre Phase, et éventuellement du paramètre Phase-Inv-Rot, tels que présents dans la primitive MCPS-PH.request présentée en relation avec la Fig. 4.

La couche de contrôle d'accès au medium MAC 405 instruit alors la couche physique PHY 406 de transmettre la trame destinée à permettre au récepteur de déterminer la phase sur laquelle est branché ledit récepteur dans l'infrastructure de distribution électrique 100, incluant des données Data correspondant à la trame construite par la couche de contrôle d'accès au medium MAC 405. La couche physique PHY 406 y ajoute typiquement des données (entêtes...) et signaux (préambule...) propres aux transmissions au niveau physique. Comme indiqué au §8.10 des spécifications « Narrowband OFDM PLC specifications for G3-PLC networks », mars 2022, la lecture du compteur de détection de phase est ici faite par la couche physique PHY 406 et l'information résultante incluse dans l'entête de contrôle de trame FCH déjà mentionné. Dans cet entête de contrôle de trame FCH est ici ajouté un champ pour indiquer l'information de phase sur laquelle est branché ledit transmetteur dans l'infrastructure de distribution électrique 100, et le cas échéant, un champ pour indiquer si ledit transmetteur subit éventuellement une inversion phase-neutre ou une rotation de phase.

Ensuite, une primitive MCPS-DATA.confirm (notée MCPS-DATA.conf sur la Fig. 10) est appelée par la couche de contrôle d'accès au medium MAC 403 pour informer la couche d'abstraction hybride HAL 402 du résultat de la transmission, par courants porteurs en ligne, de la trame en question.

À noter que la primitive MCPS-DATA.confirm est déjà présente dans les spécifications « Narrowband OFDM PLC specifications for G3-PLC networks », mars 2022.

Ensuite, une primitive HyAL-PH.confirm (notée HyAL-PH.conf sur la Fig. 10), déjà décrite en relation avec la Fig. 4, est appelée par la couche d'abstraction hybride HAL 402 pour informer la couche applicative APP 401 du résultat de la transmission, par communications par courants porteurs en ligne, de la trame en question.

La **Fig. 11** illustre schématiquement des interactions entre couches protocolaires dans le récepteur pour une réception de la trame transmise par le transmetteur en application des interactions entre couches protocolaires décrites ci-dessus en relation avec la Fig. 10.

La couche physique PHY 406 dédiée aux communications par courants porteurs en ligne reçoit la trame en question, destinée à permettre au récepteur de déterminer la phase sur laquelle est branché ledit récepteur dans l'infrastructure de distribution électrique 100.

La couche physique PHY 406 côté récepteur utilise un horodatage inscrit dans l'entête de contrôle de trame FCH par la couche physique PHY 406 côté transmetteur pour effectuer un calcul de différentiel de phase, et remonte le résultat du calcul de différentiel de phase à la couche de contrôle d'accès au medium MAC 405 dédiée aux communications par courants porteurs en ligne, accompagné de l'information de phase sur laquelle le transmetteur est branché dans l'infrastructure de distribution électrique 100 et le cas échéant de l'information d'éventuelle inversion phase-neutre ou rotation de phase subie par ledit transmetteur. Une primitive PD-DATA.indication (notée PD-DATA.ind sur la Fig. 11) peut être utilisée pour ce faire.

À noter que la primitive PD-DATA.indication est déjà présente dans les spécifications « Narrowband OFDM PLC specifications for G3-PLC networks », mars 2022, et qu'elle est ici enrichie du paramètre Phase, et éventuellement du paramètre Phase-Inv-Rot, tels que déjà décrits ici.

Ladite couche de contrôle d'accès au medium MAC 405 remonte ces informations à la couche d'abstraction hybride HAL 402 par le biais d'une primitive MCPS-DATA.indication (notée MCPS-DATA.ind sur la Fig. 11).

À noter que la primitive MCPS-DATA.indication est déjà présente dans les spécifications « Narrowband OFDM PLC specifications for G3-PLC networks », mars 2022, et qu'elle est ici enrichie du paramètre Phase, et éventuellement du paramètre Phase-Inv-Rot, tels que déjà décrits ici.

Ensuite, la couche d'abstraction hybride HAL 402 remonte ces informations à la couche applicative APP 401 par le biais de la primitive HyAL-PH.indication (notée HyAL-PH.ind sur la Fig. 11) déjà décrite ici.

De cette manière, l'information d'écart de phase avec le transmetteur (PhaseDifferential), telle que déterminée ici par la couche physique PHY 406 dédiée aux communications par courants porteurs en ligne, ainsi que l'information de phase sur laquelle est branché le transmetteur dans l'infrastructure de distribution électrique 100, et le cas échéant, l'information d'éventuelle inversion phase-neutre ou de rotation de phase, telles qu'elles ont été transmises par le transmetteur dans ladite trame, sont remontées à la couche applicative APP 401.

Alors, comme déjà décrit en relation avec la Fig. 7, la couche applicative APP 401 détermine sur quelle phase ledit récepteur est branché dans l'infrastructure de distribution électrique 100 à partir de l'information de phase de branchement du transmetteur et de l'information PhaseDifferential susmentionnée.

Préférentiellement, la couche applicative APP 401 détermine en outre si une éventuelle inversion phase-neutre ou une rotation de phase est subie par ledit récepteur à partir de l'information de phase de branchement du transmetteur, de l'information de phase de branchement du récepteur et de l'information d'éventuelle inversion phase-neutre ou rotation de phase qui a été fournie par le transmetteur.

## Revendications

1. Un procédé de détermination d'une phase de branchement d'un compteur électrique intelligent (120), dit premier dispositif nœud, dans une infrastructure de distribution électrique (100) comportant un concentrateur de données (110) situé dans un sous-répartiteur électrique distribuant de l'énergie électrique à un ensemble d'installations électriques supervisées par des compteurs électriques intelligents (120) respectifs, le concentrateur de données (110) et chaque compteur électrique intelligent (120) étant un dispositif nœud comportant une interface de communication par courants porteurs en ligne et une interface de communication sans-fil par radiofréquences, chaque dispositif nœud comportant un mécanisme de détection de passage à zéro en front montant de signal électrique alternatif et un compteur de détection de phase qui est synchronisé sur le passage à zéro en front montant du signal électrique alternatif,
le procédé étant exécuté par le premier dispositif nœud et comportant :
- lire, par une couche de contrôle d'accès au medium dédiée aux communications sans-fil par radiofréquences (403), dans une trame reçue d'un deuxième dispositif nœud par communication sans-fil par radiofréquences, un premier horodatage représentatif d'un instant de transmission de ladite trame par le deuxième dispositif nœud, ainsi qu'une information de phase de branchement du deuxième dispositif nœud dans l'infrastructure de distribution électrique (100) ;
- lire, par la couche de contrôle d'accès au medium dédiée aux communications sans-fil par radiofréquences (403), la valeur du compteur de détection de phase, et générer (707), par la couche de contrôle d'accès au medium dédiée aux communications sans-fil par radiofréquences (403), un deuxième horodatage basé sur la valeur lue du compteur de détection de phase, ainsi qu'un délai prédéterminé de traitement de trames en réception qui correspond à un temps fixe entre la détection de la trame en question par une couche physique dédiée aux communications sans-fil par radiofréquences (404) et la lecture de la valeur du compteur de détection de phase par la couche de contrôle d'accès au medium dédiée aux communications sans-fil par radiofréquences (403) ; et
- déterminer une information de phase de branchement du premier dispositif nœud dans l'infrastructure de distribution électrique (100) à partir de ladite information de phase de branchement du deuxième dispositif nœud et de la différence entre le deuxième horodatage et le premier horodatage.

2. Le procédé selon la revendication 1, dans lequel le procédé comporte en outre :
- lire, par la couche de contrôle d'accès au medium dédiée aux communications sans-fil par radiofréquences (403), dans la trame reçue du deuxième dispositif nœud par communication sans-fil par radiofréquences, une information d'éventuelle inversion phase-neutre ou de rotation de phase subie par le deuxième dispositif nœud ; et
- déterminer une information d'éventuelle inversion phase-neutre ou rotation de phase subie par le premier dispositif nœud, à partir de l'information de phase de branchement du premier dispositif nœud dans l'infrastructure de distribution électrique (100) et de l'information d'éventuelle inversion phase-neutre ou de rotation de phase subie par le deuxième dispositif nœud.

3. Le procédé selon la revendication 2, dans lequel, dans le cas d'un récepteur biphasé, l'information de phase de branchement du premier dispositif nœud dans l'infrastructure de distribution électrique (100) est en outre déterminée à partir de l'information d'éventuelle inversion phase-neutre ou de rotation de phase subie par le deuxième dispositif nœud.

4. Le procédé selon l'une quelconque des revendications 1 à 3, dans lequel le deuxième horodatage est calculé de la façon suivante : $Rx _ PDC = PDC - \left(Rx_D\times PDC_Freq\right)$ où Rx_PDC est ledit deuxième horodatage, PDC est ladite valeur du compteur de détection de phase, Rx_D est ledit délai prédéterminé de traitement des trames en réception, et PDC_Freq est une fréquence du compteur de détection de phase.

5. Le procédé selon la revendication 4, comportant :
- déterminer, par la couche de contrôle d'accès au medium dédiée aux communications sans-fil par radiofréquences (403), à partir du premier horodatage et du deuxième horodatage, un éventuel écart de phase entre le premier dispositif nœud et le deuxième dispositif nœud, et dans lequel l'éventuel écart de phase est représenté par une information calculée de la façon suivante : $PhaseDifferential = R \left(CounterDifferential/60_Deg_PDC\right) % 6$ avec $CounterDifferential = \left(Rx_PDC-Tx_PDC\right)$
où Tx_PDC est le premier horodatage, R est l'opérateur d'arrondi, 60_Deg_PDC est une constante exprimant 60 degrés par incréments de 256/360^{°} et % est l'opérateur modulo.

6. Le procédé selon la revendication 5, dans lequel lorsque CounterDifferential est négatif, CounterDifferential est translaté dans le domaine des entiers positifs en lui ajoutant 256 unités.

7. Le procédé selon l'une quelconque des revendications 5 et 6, comportant :
- retenir (711), pour déterminer la phase sur laquelle le premier dispositif nœud est branché dans l'infrastructure de distribution électrique, une valeur finale d'éventuel écart de phase avec le deuxième dispositif nœud en retenant la valeur d'éventuel écart de phase qui a été la plus obtenue à partir d'une quantité prédéterminée de trames reçues par communications sans-fil par radiofréquences.

8. Un procédé permettant de déterminer une phase de branchement d'un compteur électrique intelligent (120), dit premier dispositif nœud, parmi des dispositifs nœuds dans une infrastructure de distribution électrique (100) comportant un concentrateur de données (110) situé dans un sous-répartiteur électrique distribuant de l'énergie électrique à un ensemble d'installations électriques supervisées par des compteurs électriques intelligents respectifs (120), le concentrateur de données (110) et chaque compteur électrique intelligent (120) étant un dispositif nœud comportant une interface de communication par courants porteurs en ligne et une interface de communication sans-fil par radiofréquences, chaque dispositif nœud comportant un mécanisme de détection de passage à zéro en front montant de signal électrique alternatif et un compteur de détection de phase qui est synchronisé sur le passage à zéro en front montant du signal électrique alternatif,
le procédé étant exécuté par un deuxième dispositif nœud et comportant :
- obtenir une information de phase de branchement du deuxième dispositif nœud dans l'infrastructure de distribution électrique (100) ;
- lire, par la couche de contrôle d'accès au medium dédiée aux communications sans-fil par radiofréquences (403), la valeur du compteur de détection de phase, et générer, par la couche de contrôle d'accès au medium dédiée aux communications sans-fil par radiofréquences (403), un horodatage basé sur la valeur lue du compteur de détection de phase, ainsi qu'un délai prédéterminé de traitement de trames en transmission qui correspond à un temps fixe entre la lecture de la valeur du compteur de détection de phase par la couche de contrôle d'accès au medium dédiée aux communications sans-fil par radiofréquences (403) et la transmission de ladite trame par une couche physique dédiée aux communications sans-fil par radiofréquences (404) ;
- construire (603), par la couche de contrôle d'accès au medium dédiée aux communications sans-fil par radiofréquences (403), une trame destinée à permettre au premier dispositif nœud de déterminer la phase de branchement du premier dispositif nœud dans l'infrastructure de distribution électrique (100), incluant ledit horodatage ainsi que l'information de branchement du deuxième dispositif nœud dans l'infrastructure de distribution électrique (100) ;
- appliquer (604) une procédure de vérification de canal libre, et le cas échéant, transmettre (607) ladite trame construite, en respectant ledit temps fixe.

9. Le procédé selon la revendication 8, comportant :
- obtenir une information d'éventuelle inversion phase-neutre ou de rotation de phase subie par le deuxième dispositif nœud ;
et ladite trame construite inclut en outre l'information d'éventuelle inversion phase-neutre ou de rotation de phase subie par le deuxième dispositif nœud.

10. Un procédé de détermination d'une phase de branchement d'un premier dispositif nœud dans une infrastructure de distribution électrique (100), dans lequel le premier dispositif nœud exécute le procédé selon l'une quelconque des revendications 1 à 7 et un deuxième nœud exécute le procédé selon la revendication 8 ou 9.

11. Un produit programme d'ordinateur, comportant des instructions entraînant l'exécution, par un processeur, du procédé selon l'une quelconque des revendications 1 à 7 ou le procédé selon la revendication 8 ou 9, lorsque lesdites instructions sont exécutées par le processeur.

12. Un support de stockage, stockant un programme d'ordinateur comportant des instructions entraînant l'exécution, par un processeur, du procédé selon l'une quelconque des revendications 1 à 7 ou le procédé selon la revendication 8 ou 9, lorsque lesdites instructions sont lues depuis le support de stockage et exécutées par le processeur.

13. Un compteur électrique intelligent, dit premier dispositif nœud, configuré pour déterminer une phase de branchement dudit premier dispositif nœud dans une infrastructure de distribution électrique (100) comportant un concentrateur de données (110) situé dans un sous-répartiteur électrique distribuant de l'énergie électrique à un ensemble d'installations électriques supervisées par des compteurs électriques intelligents (120) respectifs, le concentrateur de données (110) et chaque compteur électrique intelligent (120) étant un dispositif nœud comportant une interface de communication par courants porteurs en ligne et une interface de communication sans-fil par radiofréquences, chaque dispositif nœud comportant un mécanisme de détection de passage à zéro en front montant de signal électrique alternatif et un compteur de détection de phase qui est synchronisé sur le passage à zéro en front montant du signal électrique alternatif,
le premier dispositif nœud comportant de la circuiterie électronique configurée pour exécuter le procédé selon l'une quelconque des revendications 1 à 7.

14. Un dispositif nœud, dit deuxième dispositif nœud, configuré pour permettre de déterminer une phase de branchement d'un compteur électrique intelligent (120), dit premier dispositif nœud dans une infrastructure de distribution électrique (100) comportant un concentrateur de données (110) situé dans un sous-répartiteur électrique distribuant de l'énergie électrique à un ensemble d'installations électriques supervisées par des compteurs électriques intelligents (120) respectifs, le concentrateur de données (110) et chaque compteur électrique intelligent (120) étant un dispositif nœud comportant une interface de communication par courants porteurs en ligne et une interface de communication sans-fil par radiofréquences, chaque dispositif nœud comportant un mécanisme de détection de passage à zéro en front montant de signal électrique alternatif et un compteur de détection de phase qui est synchronisé sur le passage à zéro en front montant du signal électrique alternatif,
le deuxième dispositif nœud comportant de la circuiterie électronique configurée pour exécuter le procédé selon la revendication 8 ou 9.

15. Une infrastructure de distribution électrique (100) comportant un concentrateur de données (110) situé dans un sous-répartiteur électrique distribuant de l'énergie électrique à un ensemble d'installations électriques supervisées par des compteurs électriques intelligents (120) respectifs, le concentrateur de données (110) et chaque compteur électrique intelligent (120) étant un dit dispositif nœud comportant une interface de communication par courants porteurs en ligne et une interface de communication sans-fil par radiofréquences, chaque dispositif nœud comportant un mécanisme de détection de passage à zéro en front montant de signal électrique alternatif et un compteur de détection de phase qui est synchronisé sur le passage à zéro en front montant du signal électrique alternatif,
dans laquelle chaque dispositif nœud est un premier dispositif nœud selon la revendication 13 et/ou un deuxième dispositif nœud selon la revendication 14.
